# EUROPÄISCHE PATENTSCHRIFT

(11) **EP 2 719 997 B1**
(45) Veröffentlichungstag und Bekanntmachung des Hinweises auf die Patenterteilung: **16.09.2015**
(21) Anmeldenummer: 13185549.6
(22) Anmeldetag: 23.09.2013
(51) Int. Cl.: G01B 11/24, B05C 11/00, B23K 9/12, C09J 5/00

(54) **Optischer Kopf sowie Düsenkopf mit einem optischen Kopf**
Optical head and nozzle head with an optical head
Tête optique et tête d'injection dotée d'une tête optique

(30) Priorität: 21.09.2012 DE 102012108902
(43) Veröffentlichungstag der Anmeldung: 16.04.2014
(73) Patentinhaber: SmartRay GmbH, 82515 Wolfratshausen (DE)
(72) Erfinder: Ritzl, Hans, 82451 Münsing (DE); Simon, Alexander, 83670 Bad Heilbrunn (DE); Barthel, Jan, 71638 Ludwigsburg (DE); Baum, Manuela, 71083 Herrenberg (DE); Diehl, Thomas, 70771 Leinfelden-Echterdingen (DE); Meier, Stefan, 71263 Weil der Stadt (DE); Richter, Mathias, 72108 Rottenburg (DE); Schmidgall, Stefan, 74248 Ellhofen (DE); Thill, Markus, 71065 Sindelfingen (DE); Waletzki, Alexander, 75392 Deckenpfronn (DE)
(74) Vertreter: Weickmann & Weickmann

(56) Entgegenhaltungen:
- EP-A2- 1 245 923
- DE-A1- 3 800 752
- DE-A1- 4 014 251
- US-A- 4 724 302

## Beschreibung

### I. Anwendungsgebiet

Die Erfindung betrifft einen optischen Kopf, sowie einen Düsenkopf, der einen solchen optischen Kopf beinhaltet.

### II. Technischer Hintergrund

Es sind optische Köpfe bekannt, die - montiert an zum Beispiel einem Robo-terarm - zur Führung dieses Roboterarmes entlang einer optisch detektierbaren Spur dienen. Der optische Kopf arbeitet dabei berührungslos und vorzugsweise mittels des Lichtschnitt-Triangulationsverfahrens. Dabei besteht das Ziel darin, dass der Roboterarm vom optischen Kopf in Echtzeit geführt wird. Dies wird erleichtert, wenn die Lage der abzufahrenden Spur vorher wenigstens grob bekannt ist, so dass eine Führung nur innerhalb dieser vorgegebenen Grob-Spur erfolgen muss, indem die Feinspur ermittelt wird, also die exakte Lage der Spur.

Die einzuhaltenden Randbedingungen richten sich dabei primär nach Gestalt und Einsatzzweck des zu führenden Roboterarmes und der Umgebungs Bedingungen.

Ein typischer Anwendungsfall mit schwierigen Randbedingungen ist dabei ein Roboterkopf, der einen Düsen-Kopf trägt und entlang einer Spur, die beispielsweise eine Fuge zwischen zwei Blechteilen sein kann, eine Raupe aus einem zum Beispiel pastös über Düsen ausgebrachten Dichtungsmittel so aufbringen soll, dass die Raupe einerseits ein möglichst geringes Volumen, also einen möglichst geringen Querschnitt, besitzt, aber andererseits die Fuge vollständig abdeckt. Dies ist umso besser möglich, je genauer die Führung entlang der Spur ist.

Hinzu kommt, dass sich diese Spur in schlecht zugänglichen Bereichen befinden kann, und somit der optische Kopf möglichst wenig seitlich, vor allem quer zur Fahrtrichtung, über den Düsenkopf, der die Düsen enthält, vorstehen soll.

Ein weiteres Problem besteht darin, dass beim Aufbringen der Raupe sich Spritzer des ausgebrachten Materials überall in der Umgebung ablagern, und damit auch auf dem optischen Kopf und dem Austrittsfenster und/oder Eintrittsfenster des Laserstrahles.

Zusätzlich soll während der Fahrt für das Aufbringen gleichzeitig eine optische Überprüfung der aufgebrachten Raupe daraufhin durchgeführt werden, ob das Ziel, nämlich die Abdeckung der Fuge, auch erreicht ist.

Aus der DE 38 00 752 A1 ist ein Schweißkopf bekannt, bei dem Schweißbrenner voreilend ein Führungskopf, der die zu verschweißende Fuge abtastet, und nacheilend ein optischer Prüfkopf, der die erzeugte Schweißnaht abtastet, angeordnet. Sowohl Führungskopf als auch Prüfkopf sind jedoch mit ihren einzelnen optischen Elementen separat am selben Halter befestigt, der auch die Schweißdüse trägt, folglich schlecht geschützt, z. B. den hohen Schweißtemperaturen ausgesetzt, und der Prüfkopf und Führungskopf sind nicht komplett einzeln wechselbar.

Aus der US 4 724 302, dort Figur 1, die den nächstreichenden Stand der Technik darstellt, ist eine ähnliche Anordnung bekannt, bei der die beiden optischen Köpfe jeweils in einem Gehäuse aufgenommen sind, und den gleichen Offenbarungsumfang besitzt auch die EP 1 245 923.

Aus der DE 40 14 251 A1 ist ebenfalls eine solche Einheit bekannt, wobei jedoch nacheilend zwei getrennte optische Prüfköpfe vorhanden sind, die separat die linke und rechte Flanke der erzeugten Schweißnaht prüfen sollen.

### III. Darstellung der Erfindung

### a) Technische Aufgabe

Es ist daher die Aufgabe gemäß der Erfindung, einen optischen Kopf sowie einen Düsenkopf mit diesem optischen Kopf zur Verfügung zu stellen, die diesen Bedingungen Rechnung tragen.

### b) Lösung der Aufgabe

Diese Aufgabe wird durch die Merkmale der Ansprüche 1 und 8 gelöst. Vorteilhafte Ausführungsformen ergeben sich aus den abhängigen Ansprüchen.

Erfindungsgemäß umfasst der optische Kopf dabei unter anderem zwei optische Einheiten, die in Fahrtrichtung hintereinander angeordnet sind, so dass - unabhängig von der Fahrtrichtung - die in Fahrtrichtung vorn liegende optische Einheit der Führung zum Beispiel des Roboterarmes dient und die hinten liegende optische Einheit die aufgebrachte Raupe überprüft. Würden beide Zwecke nur von einer gemeinsamen optischen Einheit erledigt, müsste sich diese zwangsweise in Fahrtrichtung hinten befinden, und als Information für den Kopf könnte nur das Kriterium verwendet werden, wenn festgestellt wird, dass die aufgebrachte Raupe die optische Spur, zum Beispiel die Fuge, nicht mehr vollständig abdeckt, was ja gerade vermieden werden soll.

Die optischen Einheiten können nach einem **2**D oder nach einem **3**D- Verfahren arbeiten, insbesondere jedoch nicht beschränkt auf das so genannte Lichtschnitt-Triangulationsverfahren.

Eine besonders einfache Bauform ergibt sich, wenn die beiden optischen Einheiten bezüglich der zwischen ihnen verlaufenden Mittelachse, die somit quer zur Fahrtrichtung liegt, symmetrisch angeordnet sind, also entweder symmetrisch zur Mittelachse oder gespiegelt an der Querebene, in der die Mittelachse liegt. Vor allem der zweite Fall hat den Vorteil, dass dadurch die in Fahrtrichtung betrachteten seitlichen Überstände des optischen Kopfes, beispielsweise über den dazwischen montierten Düsenkopf, gering bleiben und sich nur auf einer Seite des Düsenkopfes befinden.

Die optischen Einheiten sind dabei so aufgebaut, dass der Laserstrahl aus einem zur Mittelachse des optischen Kopfes nächstliegenden Bereich der optischen Einheit - die in aller Regel jeweils in einem geschlossenen Gehäuse untergebracht ist - austritt und der Laserstrahl in eine Richtung parallel zu der Mittelachse und möglichst nahe an der Mittelachse abgestrahlt wird. Der Laserstrahl besitzt dabei die Form eines Fächers, der in der Querebene zur Fahrtrichtung liegt. Der vom Objekt reflektierte Laserstrahl oder Fächer, der vom optischen Sensor aufgefangen wird, verläuft dabei vom Auftreffpunkt auf dem Objekt aus schräg von der Mittelachse weg.

Die Lage des ausgesendeten Strahls nahe an der Mittelachse hat den Vorteil, dass die in Fahrtrichtung vordere optische Einheit, die Führungseinheit, nur um eine sehr geringe Strecke vor der Mittelachse abgetastet wird, und dieser geringe Vorlauf ermöglicht erst eine genaue Spurführung auch bei starken Kurven und Krümmungen der optischen Spur. Der schräg von der Mittelachse weg verlaufende reflektierte Strahl bietet den Vorteil, dass das Eintrittsfenster für den Laser-Strahl im Gehäuse der optischen Einheit von der Mittelachse weg verlagert wird, was zum einen mit zunehmendem Abstand die Verschmutzungsgefahr reduziert, zum anderen aber auch Platz im Gehäuse der optischen Einheit schafft, um dort die übrigen Komponenten unterzubringen.

Wenn das Austrittsfenster für den Laserstrahl gegenüber dem Eintrittsfenster entgegen der Aussende-Richtung des Laserstrahls zurückversetzt ist, bietet dies den Vorteil, dass trotz des benötigten Weges für das Auffächern des Laserstrahls das Eintrittsfenster für den Laserstrahl sich relativ nahe am Reflektionspunkt, also Objekt, befindet und damit ein scharfes Bild auf dem optischen Sensor erzielt wird. Die längliche Laserlichtquelle wird vorzugsweise parallel zur Mittelachse des optischen Kopfes im Gehäuse der optischen Einheit untergebracht, wodurch die Erstreckung des Gehäuses, die ja vor allem in den Richtung sowohl quer zur Fahrtrichtung als auch quer zur Mittelachse gering sein soll, in dieser Richtung Men minimiert wird.

Den gleichen Zweck, nämlich die Abmessungen des Gehäuses der optischen Einheit vor allem in dieser Richtung zu minimieren, dient auch die Auslagerung vor allem der für die Stromversorgung notwendigen Trafos zur Reduzierung der zugeführten Spannung auf die Arbeitsspannung der Laserlichtquelle und des optischen Sensors, indem dieser Trafo nicht im Gehäuse der optischen Einheit sondern in einer separaten Powerbox angeordnet wird, und zwar gemeinsam für beide optische Einheiten.

In der jeweiligen optischen Einheit verbleiben somit neben der Laserlichtquelle und dem optischen Sensor nur diejenigen Bereiche der Auswerte-Elektronik, die für die schnelle Auswertung der Signale über kurze Wege relevant sind.

Vorzugsweise sind die beiden optischen Einheiten auch - insbesondere gemeinsam um die Mittelachse des optischen Kopfes gesteuert drehbar. Weiterhin sind die beiden optischen Einheiten um eine Schwenkachse, die in Fahrtrichtung verläuft, Schwenkbar, insbesondere zwischen zwei definierten, rastbaren Schwenk-Positionen.

Die Drehung um die Mittelachse hat den Vorteil, dass bei einer sich aus der Grob-Spur bekannten, annähernden Biegung der Spur durch eine Drehung um die Mittelachse während des Durchfahrens der Biegung die Spurführung zusätzlich optimiert werden kann.

Das Verschwenken um eine Schwenkachse, die in Fahrtrichtung liegt, hat den Vorteil, dass mehr oder weniger seitlich zum optischen Kopf liegende Bereiche auf dem Objekt abgetastet werden können.

Für verschmutzungsintensive Anwendungen wird vor allem das nahe am abzutastenden Objekt liegende Eintrittsfenster für den z.B. Laserstrahl, bei Bedarf aber auch das weiter entfernt liegende Austrittsfenster, mittels einer schnell wechselbaren, unter Umständen auch automatisch wechselbaren, durchstrahlbaren, insbesondere durchsichtigen, Schutzvorrichtung vor Verschmutzung geschützt.

Dies kann eine einfache, einsteckbare durchsichtige Platte sein, die bei Verschmutzung manuell schnell ausgewechselt werden kann, und die Abmessungen der optischen Einheiten kaum vergrößert.

Wird dagegen mit einer häufigen und laufenden Verschmutzung gerechnet, sind Lösungen zu bevorzugen, bei denen die Entfernung des verschmutzten Bereiches der Schutzvorrichtung automatisch erfolgt, insbesondere ohne den Betrieb des optischen Kopfes zu unterbrechen:
Dies kann beispielsweise ein Band aus einer durchsichtigen Folie sein, die vor dem zu schützenden Fenster entlang gezogen wird, und weiter transportiert wird, entweder sobald dort eine Verschmutzung festgestellt wird oder die grundsätzlich kontinuierlich weiter gezogen wird, beispielsweise indem das Band von einer Vorratsrolle abgewickelt und auf der anderen Seite des Fensters auf einer Aufwickel-Rolle die verschmutzte Folie aufgewickelt wird, wobei diese Aufwickel-Rolle dann gesteuert motorisch antreibbar ist.

Eine solche Anordnung aus Vorratsrolle und Aufwickelrolle mit einer durchsichtigen Folie kann als Kassette hergestellt sein, die auf das Gehäuse des optischen Kopfes einfach aufgesteckt und verrastet und dadurch sehr leicht ausgewechselt werden kann.

Falls eine Verschmutzung der durchsichtigen Schutzvorrichtung im Einzelfall detektiert werden soll und nicht kontinuierlich oder in festen Zeitabständen vorsorglich gewechselt werden soll, kann zur Ermittlung der Verschmutzung die Schutzvorrichtung von der Seite des optischen Sensors mittels einer Lichtquelle, z.B. einer Leucht-Diode, beleuchtet werden, sodass bei unverschmutzter Schutzvorrichtung dieses Licht durch die Schutzvorrichtung nach außen dringt, im verschmutzten Zustand jedoch an den verschmutzten Bereichen reflektiert wird zurück zum optischen Sensor und dort somit die Verschmutzung detektiert werden kann. Für den Betrieb des optischen Kopfes ist eine solche Lichtquelle in der Regel unschädlich, da diese ohnehin einen optischen Filter vor dem optischen Sensor umfasst, der nur die Wellenlänge des benutzten Laserlichts durchlässt. Dann befindet sich die beleuchtete Schutzvorrichtung vorzugsweise im Bereich zwischen dem optischen Filter und dem optischen Sensor der optischen Einheit.

Eine weitere Möglichkeit für eine solche Schutzvorrichtung gegen Verschmutzungen besteht in einem Rotor, der vor dem Eintrittsfenster und/oder Austrittsfenster rotiert, beispielsweise mit einer Rotationsachse zwischen den beiden Fenstern, sodass beide Fenster - betrachtet in Strahlrichtung - von demselben Propeller abgedeckt werden.

Die Rotorarme bestehen dabei aus einem nicht durchsichtigen Material. Der drehend angetriebene und hinsichtlich seiner Drehlage ständig detektierte Rotor steht jedoch mit der Steuerung des optischen Kopfes in Verbindung, und die einzelnen Aufnahmen, die jeweils nur Millisekunden dauern, werden genau zu den Zeitpunkten durchgeführt, zu denen sich eine Lücke zwischen zwei aufeinander folgenden Rotorblättern des rotierenden Rotors vor dem jeweiligen Fenster befindet.

Der Rotor kann die Form eines Propellers besitzen, in dem die einzelnen Rotorblätter von der Rotorachse radial abstreben, sei es genau in einer Radialebene oder schrägstehend zur Rotationsachse.

Der Rotor kann jedoch auch topfförmig gestaltet sein, indem vom Rand einer rotierenden Rotorplatte aus die Rotorblätter axial, insbesondere parallel zur Rotationsachse der Rotorplatte, abstreben. Ein solcher topfförmiger Rotor kann vor der Seite mit dem Ein- und Austrittsfenster des optischen Kopfes rotieren oder der optische Kopf kann sich im Inneren des Topfes befinden, sodass vor seinen Aus- und Eintrittsfenstern abwechselnd die Rotorblätter vorbeiziehen.

Zusätzlich sind die Rotorblätter vorzugsweise so gestaltet, dass sie eine Luftströmung vom Gehäuse weg bewirken, und bereits dadurch ein heranfliegendes Verschmutzungsteilchen unter Umständen gar nicht mehr den Rotor erreicht, sondern bereits vorher radial zur Seite hin abgelenkt wird. Falls doch, ist die Drehzahl des Rotors zusammen mit der Schrägstellung der Rotorblätter und deren Erstreckung in Umfangsrichtung so bemessen, dass ein Verschmutzungsteilchen den Rotorbereich nicht durchdringen kann, sondern auf einem Rotorblatt auftrifft und von dort durch die Fliehkraft vom Rotor nach außen geschleudert wird. Dort können u.U. spezielle Auffangflächen für solche Verschmutzungen vorgesehen sein oder es wird das Auftreffen auf den Bauteilen der Umgebung hingenommen. Zu diesem Zweck beträgt die Drehzahl des Rotors zwischen **2000** und **4000** U/min., besser zwischen **2500** und **3500** U/min.

Der Rotor kann in einer Radialebene zu seiner Rotationsachse angeordnet sein, oder es kann sich um einen kegelförmigen Rotor handeln, bei dem die Rotorblätter in einem Winkel von weniger als **90°** zu ihrer Rotationsachse stehen.

Dabei kann der Rotor - bis auf den Bereich der abzudeckenden Fenster - von einem zusätzlichen, vorzugsweise eigenen, Schutzgehäuse abgedeckt sein, um ihn weitestgehend vor mechanischen Beschädigungen zu schützen.

Die typische Anwendung eines solchen optischen Kopfes ist ein zum Beispiel von einem Roboterarm geführter Düsenkopf, in dem sich eine oder meist mehrere Düsen zur Abgabe des Materials der Raupe befinden, die alle eine Ausbringensrichtung in der quer zur Fahrtrichtung des Düsenkopfes liegenden Querebene besitzen, jedoch in unterschiedliche Richtungen gerichtet sind, um die Raupe an der gewünschten Stelle auch bei nahe an der Spur liegenden Hindernissen aufbringen zu können.

Die optischen Einheiten sind dabei eine vor und eine hinter den Düsen am Düsenkopf oder dem den Düsenkopf mit Material versorgenden Düsenrohr befestigt, und zwar so, dass sie die Auftreffbereiche von mindestens zwei der Düsen des Düsen-Kopfes abtasten können.

Falls auch Auftreff-Bereiche von weiteren, in einem anderen Winkel abstrahlenden Düsen detektierbar sein sollen, ist der optische Kopf bzw. dessen optische Einheiten um eine Schwenkachse gegenüber dem Düsenkopf schwenkbar, vorzugsweise zwischen zwei definierten Schwenklagen.

Die optischen Einheiten sind dabei am Düsenkopf so befestigt, dass das Eintrittsfenster für den Laserstrahl maximal **40** mm, besser maximal nur **30** mm vom Düsenkopf aus nach hinten, also in Querrichtung zur Fahrtrichtung, in Richtung des Düsenrohres versetzt ist.

Um die Arbeit des Düsenkopfes nicht zu behindern, ist - betrachtet in Fahrtrichtung - das Gehäuse der optischen Einheit maximal **30** %, besser maximal **20** %, besser maximal **10** % breiter als der Düsenkopf oder auch das Düsenrohr, je nachdem welches dieser beiden Teile in Fahrtrichtung betrachtet das breitere Teil ist.

Aus dem gleichen Grund sind die Gehäuse der optischen Einheiten parallel zur Verlaufsrichtung des Düsenrohrs angeordnet, und falls hierzu ein schräger austretender Laserstrahl benötigt wird, wird dies durch eine entsprechende Umlenkung des Laserstrahls vor dem Austrittsfenster erreicht. Die Ebene, die durch den austretenden fächerförmigen Laserstrahl definiert wird, liegt vorzugsweise lotrecht zur Fahrtrichtung.

Die Mittelachse des Düsenrohres ist dabei vorzugsweise gleichzeitig die Mittelachse zwischen den beiden optischen Einheiten des optischen Kopfes, so dass diese also symmetrisch zum Düsenrohr angeordnet sind. Das Düsenrohr ist vorzugsweise um seine Mittelachse schwenkbar, beispielsweise um +/ **-360°** schwenkbar. Die oben erwähnte Powerbox ist am bezüglich des Düsenkopfes zurückversetzten mittleren oder hinteren Teil des Düsenrohres angeordnet, also etwas weiter entfernt von der Aufbringstelle der Raupe.

Die Powerbox dreht somit bei einer Drehung des Düsenrohres mit diesem mit, so dass die elektrischen Leitungen von den optischen Einheiten zur Powerbox keiner Relativ-Bewegung unterliegen. Eine solche Bewegung von frei geführten Kabeln tritt nur auf von der Powerbox zur Steuerung der Gesamtanlage, die an einem nicht bewegten Teil angeordnet ist, und zwar bedingt durch die Drehung des Düsenrohres, aber diese weiterführenden Kabel können auf ein einziges Kabel reduziert werden, so dass speziell die Gefahr des Verklebens von Kabeln und anschließende Relativbewegung mit der Folge von Beschädigungen hierbei nicht auftreten kann.

Die Steuerung des Düsenkopfes ist einerseits in der Lage, in Echtzeit und abhängig von den Signalen, die sie von der in Fahrtrichtung vorderen optischen Einheit, der Führungs-Einheit, erhält, den Düsenkopf entlang der Spur zu führen und gegebenenfalls auch zu verschwenken. Gleichzeitig wählt die Steuerung auch automatisch die passende Düse des Düsenkopfes zum Aufbringen der Raupe aus, und verschwenkt abhängig davon die optischen Einheiten - eine oder beide - um die Schwenkachse, die parallel zur Fahrtrichtung liegt.

Um für den Fall eines Schadens an der optischen Einheit die Betriebsunterbrechung gering zu halten, sind die optischen Einheiten mittels eines Schnell-Verschlusses, insbesondere einer Rastvorrichtung, am Düsenkopf und /oder am Düsenrohr befestigt und besitzen vorzugsweise eine optische Funktionsanzeige zum Beispiel in Form von LEDs.

Ein solcher Düsen-Kopf kann optimal genutzt werden, wenn der Steuerung des Düsenkopfes zunächst einmal die grobe Lage der Spur vorgegeben wird mit noch erheblichen Toleranzen.

Ein typischer Fall ist das Aufbringen von Dichtmaterial auf den Fugen zwischen zwei angrenzenden Blechteilen an der Karosserie eines Kraftfahrzeuges. Dabei ist der Verlauf der Fuge natürlich in etwa immer der gleiche, abhängig von Fertigungs-Ungenauigkeiten, der Positionierung der jeweiligen Karosse an der Bearbeitungs-Stelle etc. jedoch nie genau gleich.

Die Grobspur kann der Steuerung entweder durch Eingabe entsprechender digitaler Daten bekannt gegeben werden, oder durch ein erstes Abfahren in einer Lern-Fahrt, zum Beispiel auch mit manueller Führung bei der Lern-Fahrt, entlang einer ersten Karosse oder eines ersten Werkstückes, insbesondere eines Referenz-Werkstückes in einer Referenz-Position.

Sobald der Steuerung die Grobspur bekannt ist, kann das Aufbringen der Raupe beginnen, indem vorzugsweise zunächst ein Referenzpunkt an der Spur angefahren wird, beispielsweise der Anfang der Spur, und von dort aus der Kopf entlang der Spur verfahren wird, geführt von der optischen Führungseinheit, und dabei die Raupe auf der Spur aufgebracht wird, wobei die Führungseinheit die Fein-Spur in Echtzeit ermittelt.

Die zweite optische Einheit, die Prüfeinheit, kontrolliert hinter dem Aufbringungspunkt der Raupe deren Lage zur Spur und/oder der Querschnittskontur oder andere geforderte Parameter, ebenfalls wieder in Echtzeit, oder diese Überprüfung wird in einer separaten Prüffahrt durchgeführt.

Vorzugsweise wird - zum Beispiel an dem Referenzpunkt - eine Helligkeitsprüfung durchgeführt. Durch erneutes Anfahren des Referenzpunktes vorzugsweise noch beim gleichen Werkstück nach Auftrag der Raupe wird überprüft, ob sich die Helligkeit am Referenzpunkt geändert hat, was dann den Schluss nahe legt, dass das Eintrittsfenster und/oder das Austrittsfenster der optischen Einheit verschmutzt ist und eine Reinigung oder des Austausches der durchsichtigen Schutzvorrichtung bedarf.

### c) Ausführungsbeispiele

Ausführungsformen gemäß der Erfindung sind im Folgenden beispielhaft näher beschrieben. Es zeigen:
- Fig. **1:**: den Düsenkopf samt optischem Kopf in perspektivischer Ansicht,
- Fig. **2**a-c:: den Düsenkopf der Figur **1** in einzelnen Ansichten,
- Fig. **3**a,b,c:: eine einzelne optische Einheit des optischen Kopfes
- Fig. **4**:: eine Detailansicht des optischen Düsenkopfes und
- Fig. **5**a-d:: optische Einheiten mit Rotor.

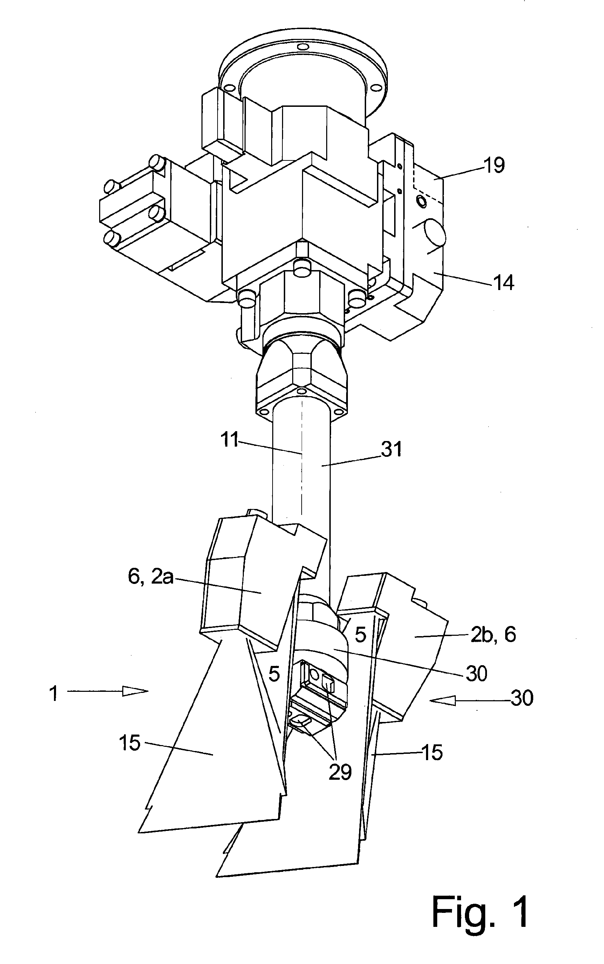

**Fig. 1** zeigt in perspektivischer Ansicht einen vollständigen Düsenkopf 30 einschließlich des optischen Kopfes **1**, bestehend aus den beiden optischen Einheiten **2**a, **2**b sowie der Powerbox **14**, die die optischen Einheiten **2**a, b mit Energie versorgt, und die weiter oben an der nicht mit drehenden Lagerungsbasis des drehbaren Düsenrohres **31** befestigt ist, während an dem unterem, freien Ende des drehbaren Düsenrohres **31** sich die in unterschiedliche Richtungen gerichteten Düsen **29** des eigentlichen Düsenkopfes **30** befinden. In der Praxis wird die Powerbox **14** jedoch häufig ebenfalls am drehbaren Düsenrohr **31** befestigt sein und damit mit den optischen Einheiten **2**a, b mit drehen können.

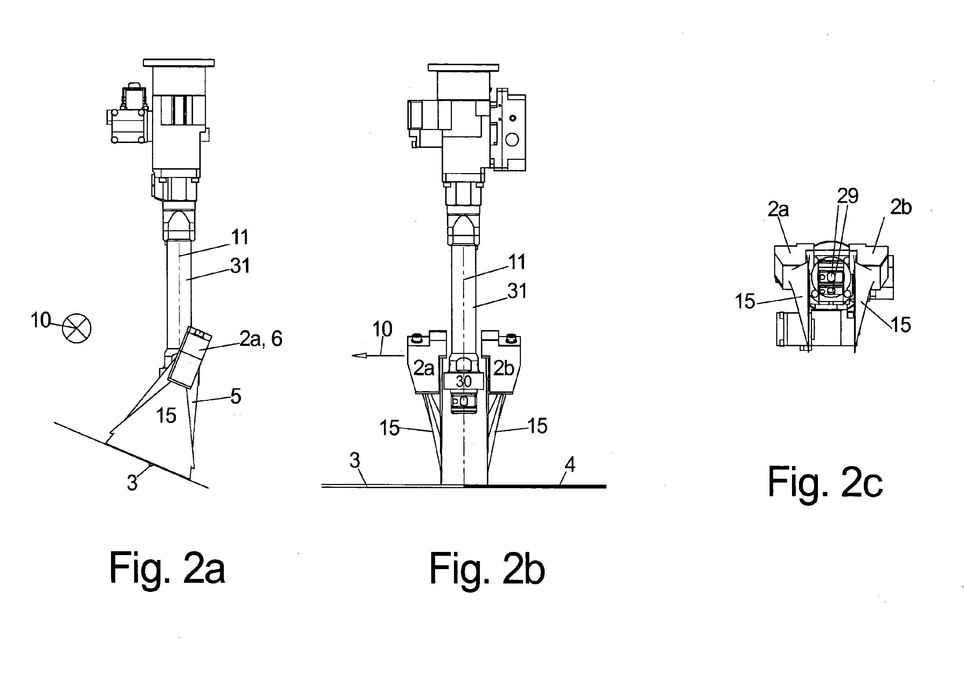

Der gesamte Düsenkopf, wie in Figur **1** dargestellt, ist in der Regel an einer Handhabungseinheit, beispielsweise einem Roboterarm, befestigt, und wird in einer Fahrtrichtung **10,** die quer zur Mittelachse **11,** der Erstreckungsrichtung des Düsenrohres **31,** verläuft, verfahren. Er soll dabei einer optisch erkennbaren Spur **3,** beispielsweise einer Fuge zwischen zwei Blechteilen, folgen, die z.B. mittels einer Raupe **4** aus einem Dichtungsmaterial abgedeckt werden soll, welches aus einer der Düsen **29** des Düsenkopfes **30** aufgebracht wird, wie am besten die zueinander senkrecht stehenden **Figuren 2** **a, b** erkennen lassen.

Die in Fahrtrichtung **10** vordere optische Einheit **2a** - siehe Figur **2b** - tastet dabei die Spur **3** ab und führt und steuert die Handhabungseinheit und damit den gesamten Düsenkopf **30** entlang dieser Spur **3,** während die in Fahrtrichtung **10** hinter den Düsen **29** des Düsenkopfes **30** angeordnete zweite optische Einheit **2**b die aufgebrachte Raupe **4** kontrolliert, vorzugsweise daraufhin dass sie zum einen lückenlos aufgebracht ist, also keine Fehlstellen aufweist, und zum anderen daraufhin, dass sie die abzudeckende Spur **3,** meist eine Fuge zwischen zwei Blechteilen, auch vollständig abdeckt.

Denn je genauer der Düsenkopf **30** entlang der Spur **3** geführt wird und dementsprechend je genauer die aktive Düse **29** auf die Spur **3** gerichtet ist, umso kleiner kann der Querschnitt der auf der Spur **3** aufzubringenden Raupe **4** gewählt werden, und umso geringer ist der Materialbedarf für die Raupe **4,** ohne dass die gewünschte Dichtfunktion, nämlich das vollständige Abdecken der Fuge zwischen den Blechteilen, dabei negativ beeinträchtigt wird.

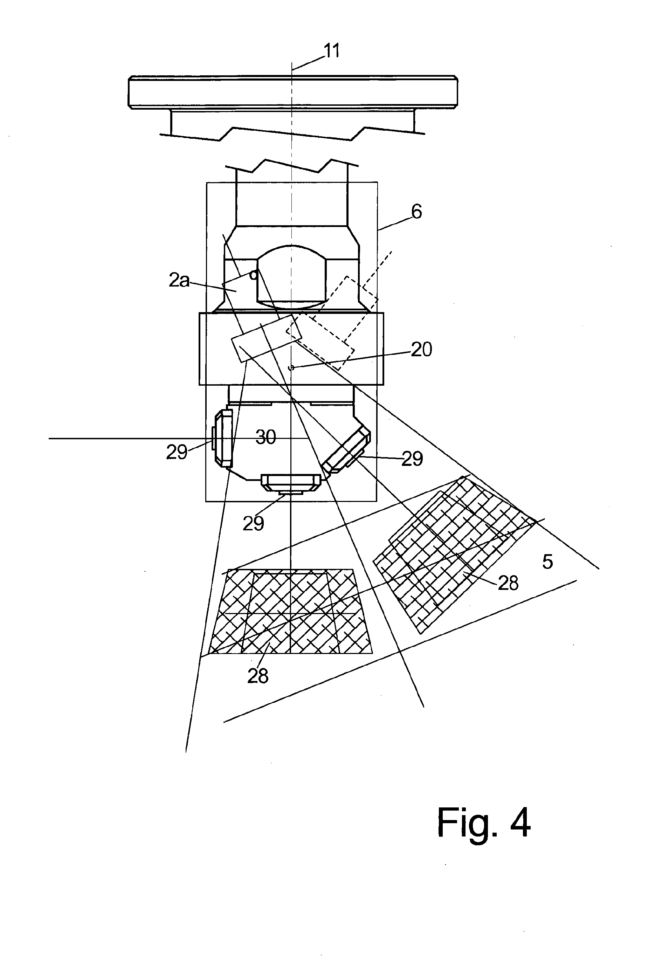

Wie am besten Figur **4** zeigt, sind die beiden optischen Einheiten **2**a, b schräg zur Mittelachse **11** des Düsenkopfes **30** angeordnet, damit in dieser Stellung der optischen Einheit **2**a die Auftreffbereiche **28** mehrerer verschiedener Düsen **29** des Düsenkopfes **30** abgedeckt werden können:
Wie Figur **4** zeigt, sind im Düsenkopf **30** drei Düsen **29** vorhanden, die in der Düsenebene - die in der Regel quer zur Fahrtrichtung **10** des Düsenkopfes **30** liegt - bezüglich der Mittelachse **11** unter **0°,** + **45°** und **-90°** ausgerichtet. Dabei wird jeweils diejenige Düse **29** benutzt, mittels der die abzudeckende Spur **3** abhängig von den Umgebungsbedingungen am besten erreichbar ist. Wie Figur **4** zeigt, ist der Fächer **5** des Laserstrahls mit einem solchen Fächerwinkel α ausgestattet, dass bei der vorliegenden Entfernung zum abzutastenden Objekt die Auftreffbereiche **28** sowohl der **0**-Grad-Düse als auch der **45**-Grad-Düse mit derselben Stellung der optischen Einheit **2**a abgetastet werden können.

Würde dagegen die Minus-**90**°-Düse **29** benutzt werden, so müsste hierfür die optische Einheit **2**a bezüglich des Düsenkopfes **30** verschwenkt werden. Die Schwenkachse **20** hierfür wäre dann vorzugsweise gegenüber allen Kreuzungspunkten der Düsenaustrittsrichtungen in Richtung Mittelachse **11** nach hinten, also von Düsenkopf **30** weg, versetzt.

Zusätzlich ist in Figur **4** die Austrittsrichtung der Mittelachse des Fächers **5** des Laserstrahles schräg zum Gehäuse **6** der optischen Einheit **2**a angeordnet, um das Gehäuse **6** parallel zum Düsenrohr **31** anordnen zu können, denn in dieser Stellung ragt es auf beide Seiten am wenigsten über den Düsenkopf **30** hinaus und bietet die geringste Kollisionsgefahr.

Bei der Lösung gemäß den Figuren **1** bis **3****,** in der - betrachtet in Fahrtrichtung **10** - die Mittelachse des Lichtfächers **5** mit der Längsachse des Gehäuses **6** übereinstimmt, stehen die Gehäuse **6** schräg zur Mittelachse **11** des Düsenrohres **31** und stehen damit weiter seitlich vor, wie vor allem Figur **2**a deutlich zeigt.

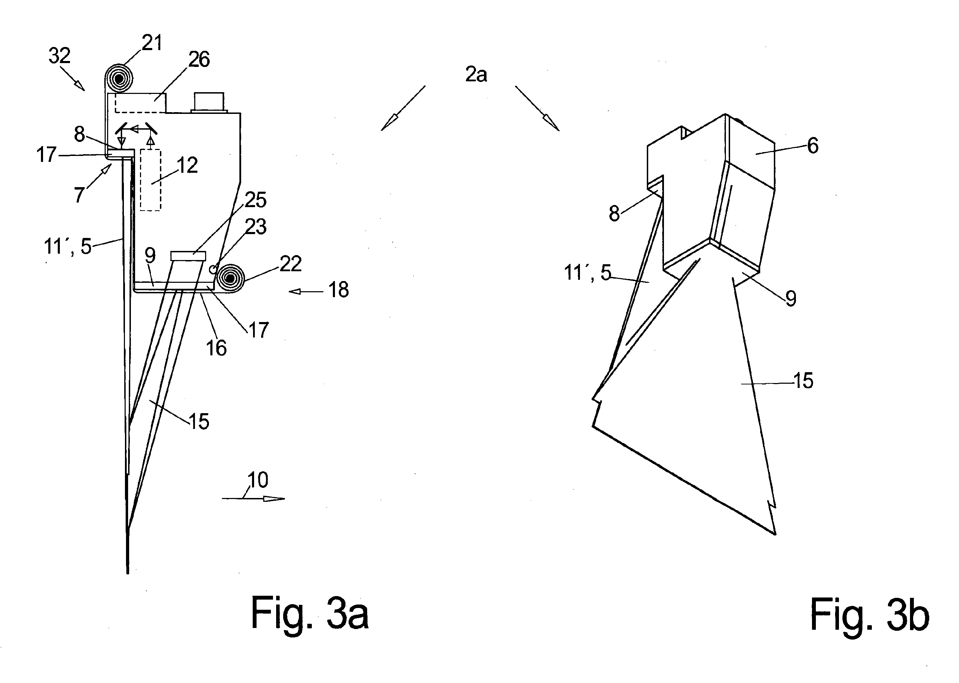

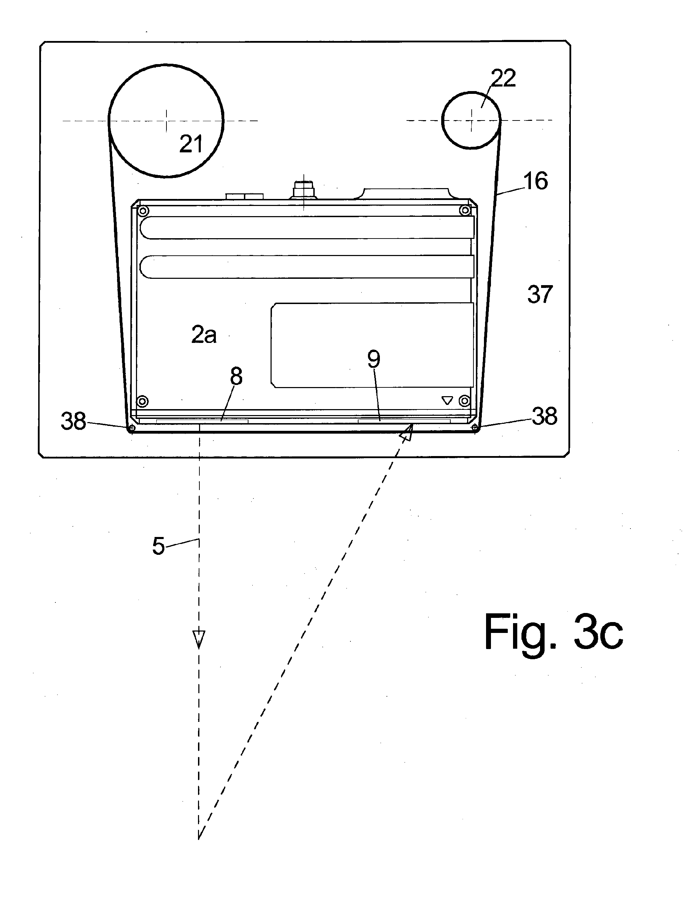

Andererseits vereinfacht dies den inneren Aufbau und die Herstellung der einzelnen optischen Einheiten **2**a, b, und vor allem wird es dadurch möglich, die beiden optischen Einheiten **2**a, b identisch auszubilden, sodass nur eine Sorte von optischen Einheiten **2**a, b hergestellt und vorgehalten werden muss.
Eine einzelne optische Einheit **2**a ist in den Figuren **3**a und **3**b dargestellt, und zwar in Figur **3**a genau mit Blick in Richtung der Querebene **11**', die lotrecht zur Fahrtrichtung **10** liegt.

Jede optische Einheit **2**a ist in einem Gehäuse **6** angeordnet, welches an seiner Düsenseite **32,** mit der es später dem Düsenkopf **30** zugewandt montiert wird, einen Absatz **7** aufweist.

Im Inneren des Gehäuses **6** ist eine meist längliche Laserlichtquelle **12** angeordnet, in diesem Fall parallel zur Düsenseite **32,** und der von dort nach oben austretende Laserstrahl **5** wird über zwei Umlenkspiegel um **2** x **90°** umgelenkt, sodass er über das in dem Absatz **7** angeordnete Austrittsfenster **8** austritt und sich in der Querebene **11'**- aufgefächert zu einem in dieser Ebene liegenden Fächer **5** - gegen das abzutastende Objekt gerichtet wird und von dessen Oberfläche reflektiert wird.

Der reflektierte, ebenfalls fächerförmige Strahl **15** wird von einem optischen Sensor **25,** beispielsweise einem CCD-Sensor, der im Inneren des Gehäuses **6** hinter dem Eintrittsfenster **9** angeordnet ist, aufgenommen.

Das Eintrittsfenster **9** befindet sich dabei in der Unterseite des Gehäuses **6,** und somit zwar parallel zum Austrittsfenster **8,** aber gegenüber diesem näher an dem abzutastenden Objekt.

Das Eintrittsfenster **9** als auch der optische Sensor **25** befinden sich dabei auf der von der Düsenseite **32** abgewandten Seite derjenigen Querebene **11',** in der der ausgesandte Laserstrahl **5** liegt, sodass sich in Fahrtrichtung **10** das Eintrittsfenster **9** von der Düsenseite **32** weiter entfernt befindet als das Eintrittsfenster **7.**

Dadurch wird erreicht, dass der ausgesandte Laserstrahl **5** optimal nah am Düsenkopf **30** vorbei verläuft und auf das zu prüfende Objekt auftrifft, wodurch die Führungsgenauigkeit des Düsenkopfes **30** weiter verbessert wird.

Das Austrittsfenster **8** ist gegenüber dem Eintrittsfenster **9** zurückversetzt, um für den austretenden Laserstrahl **5** eine größere Strecke bis zum Auftreffen auf dem Objekt zur Verfügung zu stellen für dessen Auffächerung.

Ein weiterer Effekt ist, dass wegen des größeren Abstandes zum Objekt, also der reflektierenden Stelle, die Gefahr geringer ist, dass das aus der Düse **29** flüssig oder pastös ausgebrachte Material der Raupe **4** beim Aufbringen spritzt, und Spritzer davon auf das Austrittsfenster **8** des Laserstrahls **5** gelangen und dieses verunreinigen, welches ja wie das Eintrittsfenster **9** aus einem für den Laserstrahl durchsichtigen Material besteht.

Da diese Verschmutzungsgefahr jedoch nicht vollständig beseitigt werden kann, sind vorzugsweise beide Fenster mittels einer Schutzvorrichtung **18** vor dauerhafter Verschmutzung gesichert:
Dies können entweder vor die einzelnen Fenster **8, 9** einschiebbare und daher leicht wechselbare Einsteckplatten **17** aus für das Laserlicht durchsichtigem Material sein, die nach Verschmutzung getauscht werden.

Da dies eine manuelle Arbeit ist, die zu einer Unterbrechung des Einsatzes des Düsenkopfes **30** führt, ist die ebenfalls in Figur **3**a dargestellte automatisch arbeitende Schutzvorrichtung **18** zu bevorzugen:
Dabei wird eine für den Laserstrahl durchsichtige Folie **16** vor dem Austrittsfenster **8** und/oder dem Eintrittsfenster **9 -** vorzugsweise hinter beiden nacheinander in dieser Reihenfolge - entlang geführt, so dass auftreffende Verschmutzungen sich auf dieser Folie ablagern.

Die Folie **16** kann auf einer Vorratsrolle **21** bevorratet sein und weiter gewickelt werden auf eine Aufwickelrolle **22,** wodurch über einen langen Betriebszeitraum saubere unverschmutzte Folie **16** zur Verfügung steht. Das Weiterführen der Folie **16** kann durch ein gesteuertes motorisches Antreiben der Aufwickelrolle **22** automatisch und während des Betriebes durchgeführt werden.

Dabei kann die Folie je nach vorhandenem Platz innerhalb des Gehäuses **6** geführt werden und/oder auch die Rollen **21, 22** im Inneren des Gehäuses angeordnet werden, und lediglich im Bereich der Fenster **8, 9** müssen sich die Folien außerhalb der Fenster befinden und geführt sein.

Allerdings ist es für das Auswechseln der Folie **16** vorteilhaft, deren Führungen als auch die Rollen **21, 22** außen am Gehäuse **6** der optischen Einheit 2a zu befestigen.

Figur 3c zeigt dabei eine Lösung, bei der die Rolle **21, 22** sowie die Führungen **38** für die Folie **16** in einer Kassette **37** angeordnet sind, die einen einseitig offenen Freiraum aufweist entsprechend der Form der optischen Einheit **2**a, sodass die Kassette **37** formschlüssig auf die Einheit **2**a aufgesteckt und z.B. verrastet werden kann und dadurch die Folie positionsgenau vor den Fenstern **8, 9** liegt.

Vorzugsweise bewegt sich die Folie **16** dabei in einer Ebene, die lotrecht zur Düsenseite **32** des Gehäuses **6** liegt, um die Breite des Gehäuses **6** nicht zu vergrößern.

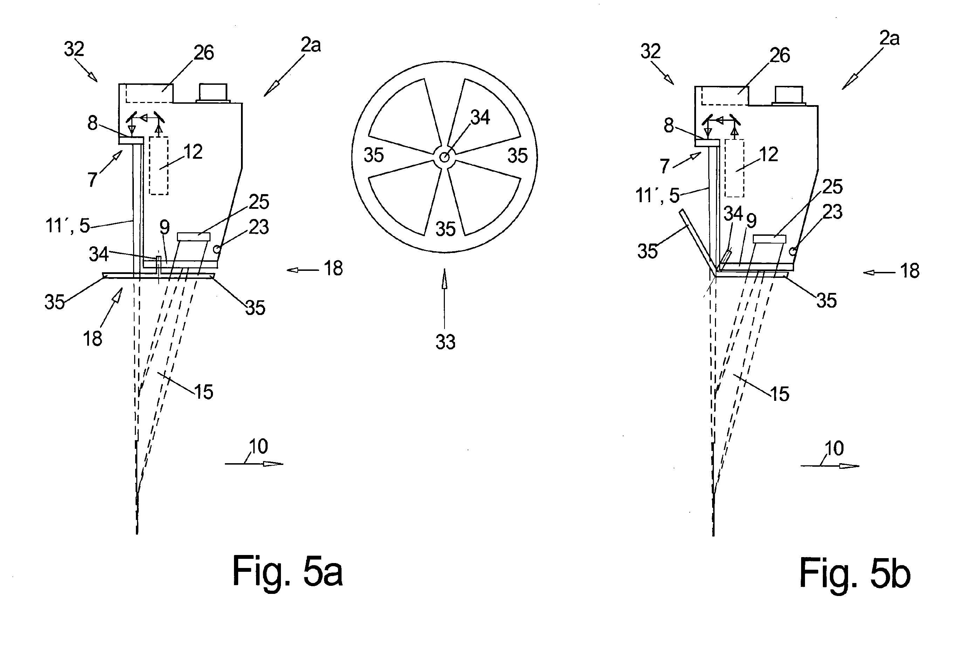

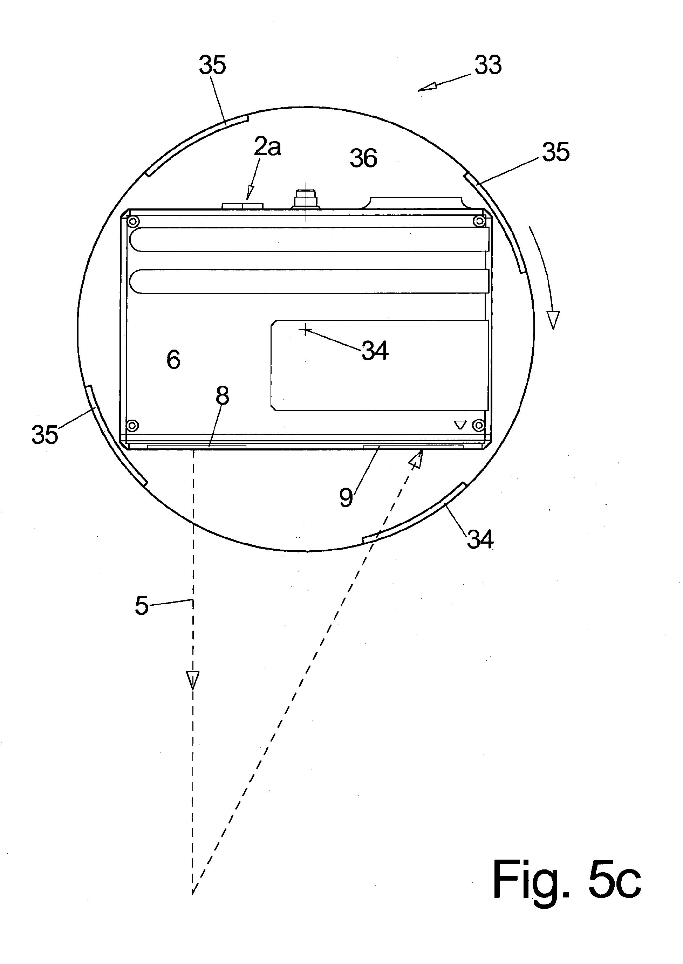

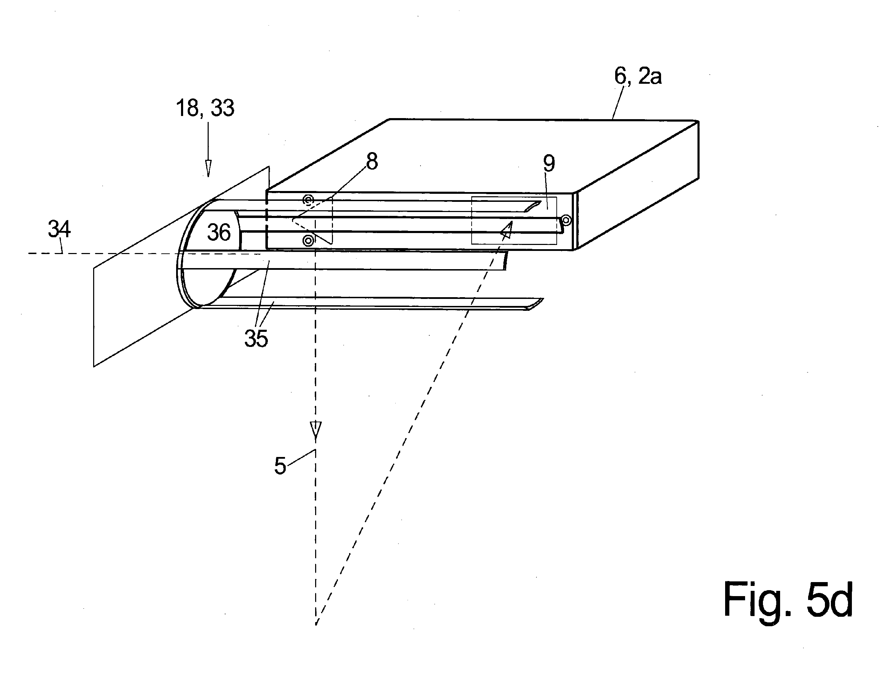

Die Figuren **5**a,b zeigen des weiteren zwei Varianten einer Schutzvorrichtung **18,** die darin besteht, dass ein Rotor **33** - wie zwischen diesen Figuren dargestellt - vor dem Austrittsfenster **8** und dem Eintrittsfenster **9** einer optischen Einheit **2**a rotiert, wobei es prinzipiell egal ist, welche Form diese optische Einheit besitzt.

In diesem Fall handelt es sich bei dem Rotor **33** um die klassische Form, bei der die Rotorblätter **35** radial von der Rotorachse **34** abstreben. In diesem Fall sind die freien Enden der Rotorblätter **35** mittels eines Außenringes zur Verbesserung der Stabilität miteinander verbunden, was jedoch nicht zwingend notwendig ist.

In beiden Fällen ist der Rotor **33** am Gehäuse **6** der optischen Einheit **2**a drehbar befestigt und gesteuert antreibbar, und zwar mit der Rotorachse **34** zwischen den beiden Fenstern **8** und **9.**

Bei der Lösung der Figur **5**a liegen die Rotorblätter **35** in einer Radialebene zur Achse **34**, und rotieren in geringem Abstand vor der Seite des Gehäuses, und parallel zu dieser, in dem sich das Eintrittsfenster **9** befindet. Wegen des Rückversatzes des Austrittsfensters **8** besteht somit ein großer Abstand zwischen dem Austrittsfenster **8** und der Rotationsebene der Rotorblätter **35**, was für die Funktion jedoch nicht hinderlich ist.

Wichtig ist lediglich, dass bei beiden Varianten die Rotorblätter **35** ausreichend lang sind, um in radialer Richtung beide Fenster **8,9** abzudecken.

Bei der Lösung gemäß Figur **5**b ragen die Rotorblätter **35** schräg von der Rotationsachse **34** ab, also mit einem spitzen Winkel dazwischen. Der Rotationskegel liegt auf der einen Seite mit geringem Abstand vor der Seite des Gehäuses, in der sich das Eintrittsfenster **9** befindet, und läuft schräg zu der Gehäuseseite, die den Rücksprung zwischen Austrittsfenster **9** und Eintrittsfenster **8** im Gehäuse **6** bewirkt. Dadurch wird ein zu großer seitlicher Überstand über die Seitenwand des Gehäuses vermieden.

Die Figuren **5**c und d zeigen Ausführungsformen mit einem grundsätzlich anders gestalteten Rotor **33:**
Dieser besteht aus einer Rotorscheibe **36,** welche um eine Rotorachse **34** rotiert, die lotrecht zur Ebene der Rotorscheibe **36** steht. Die Rotorblätter **35** ragen vom Rand der in der Regel runden Rotorscheibe **36** aus axial ab, erstrecken sich also parallel zur Rotorachse **34.**

Am Beispiel eines etwa rechteckigen Gehäuses **6** einer optischen Einheit **2**a ist in Figur **5**c der bevorzugte Fall dargestellt, dass die optische Einheit **2**a mit dem Gehäuse **6** im topfförmigen Inneren dieses Rotors **33** positioniert ist, und die Länge der Rotorblätter **35** mindestens so groß ist, dass in Richtung ihrer Erstreckung sie das Austrittsfenster **8** und Eintrittsfenster **9** der optischen Einheit **2**a abdecken.

Je nach Form des Gehäuses **6** ergibt dies eine sehr raumsparende Lösung, wobei die offene Seite des topfförmigen Rotors **33** unter Umständen durch einen stillstehenden Deckel ganz oder teilweise verschlossen werden kann, und dadurch ein weiterer Schutz der optischen Einheit **2**a vor Verschmutzung gegeben ist.

Die Figur **5**d zeigt eine Lösung, bei der die optische Einheit **2**a nicht im Inneren des topfförmigen Rotors angeordnet ist, sondern der topfförmige Rotor im Abstand vor derjenigen Seite des Gehäuses **6** rotiert, in der sich das Austrittsfenster **8** sowie das Eintrittsfenster **9** befinden. Diese Lösung ist beispielsweise bei sehr flachen, plattenförmigen Gehäusen **6** der optischen Einheit **2**a vorteilhaft.

Auch hier muss der Durchmesser der Rotorscheibe **36** und die Länge der Rotorblätter **35** so bemessen sein, dass sie bei Rotation die Gehäuseseite mit Austrittsfenster **8** und Eintrittsfenster **9** vollständig überdecken.

In allen Fällen ist vorzugsweise beabsichtigt, dass während des Zeitraumes einer Messung, die ja nur Millisekunden beträgt, kein Rotorblatt vor den Fenstern vorbeiläuft, sondern sich vor beiden Fenstern jeweils eine Lücke, vorzugsweise die gleiche Lücke, zwischen zwei Rotorblättern **35** befindet.

Somit muss die Drehzahl des Rotors **33** in Abstimmung mit den Abmessungen der Rotorblätter und Positionierung des Rotors zur optischen Einheit so festgelegt werden, dass während der Zeit einer Messung kein Rotorblatt in den Bereich vor einem der Fenster eintaucht und andererseits muss die Drehzahl des Rotors so hoch gesetzt werden, dass ein mit einer in der Regel bekannten Fluggeschwindigkeit auf den Rotor **33** zufliegendes Verschmutzungsteilchen nicht durch die Lücke zwischen zwei Rotorblättern hindurch gelangen kann, sondern immer auf ein Rotorblatt trifft und von diesem weg geschleudert wird.

Dies kann zusätzlich unterstützt werden durch eine entsprechende Querschnittsform der Rotorblätter, beispielsweise nach Art eines Flugzeugflügels, mit einem Profil, welches einen vom Rotor weg gerichteten Luftstrom erzeugt und/oder durch einen mittels Düsen und Druckluft erzeugten Luftstrom die heranfliegenden Verschmutzungsteilchen ebenfalls von den Eintrittsfenstern weg leiten.

Solche Druckluftdüsen sind vorzugsweise am Gehäuse **6** der optischen Einheit **2a** angeordnet, können jedoch auch am Rotor **33** angeordnet sein. Ihre konkrete Positionierung hängt stark von der Form des Gehäuses **6** und der Form des verwendeten Rotors **33** ab.

### BEZUGSZEICHENLISTE

- **1**: optischer Kopf
- **2**a, b: optische Einheit
- **3**: Spur
- **4**: Raupe
- **5**: Laserstrahl, Fächer
- **6**: Gehäuse
- **7**: Absatz
- **8**: Austrittsfenster
- **9**: Eintrittsfenster
- **10**: Fahrtrichtung
- **11**: Mittelachse
- **11'**: Ebene, Querebene
- **12**: Laserlicht-Quelle
- **13**: Transformator
- **14**: Powerbox
- **15**: reflektierter Strahl
- **16**: Folie
- **17**: Einsteck-Platte
- **18**: Schutzvorrichtung
- **19**: Steuerung
- **20**: Schwenkachse
- **21**: Vorrats-Rolle
- **22**: Aufwickel-Rolle
- **23**: Lichtquelle
- **24**: Spiegel
- **25**: optischer Sensor
- **26**: Auswerte-Elektronik
- **27**: Rastvorrichtung
- **28**: Auftreff-Bereich
- **29**: Düse
- **30**: Düsenkopf
- **31**: Düsenrohr
- **32**: Düsenseite
- **33**: Rotor
- **34**: Rotorachse
- **35**: Rotorblatt
- **36**: Rotorscheibe
- **37**: Kassette
- **38**: Führungen

## Patentansprüche

1. Optischer Kopf (1), welcher mittels Laser-Licht, und insbesondere nach dem Lichtschnitt-Triangutationsverfahreren arbeitet,
mit zwei optischen Einheiten (2a,b) zum Führen des Kopfes (**1**) entlang einer optisch detektierbaren Spur (**3**) in einer Fahrtrichtung (**10**) und zum Prüfen einer in oder auf der Spur (**3**) aufgebrachten Raupe (**4**), zum Beispiel aus Kleber, wobei die zwei optischen Einheiten (**2a**,b) in Fahrtrichtung (**10**) versetzt angeordnet sind und die in Fahrtrichtung (**10**) vorn liegende (**2a**) als Führungseinheit und die hintere (**2b**) als Prüfeinheit arbeitet,
**dadurch gekennzeichnet, dass**
- jede optische Einheit (**2a**,b) in einem eigenen Gehäuse (**6**) angeordnet ist,
- die Stromversorgung und Stromzuführung einschließlich aller Transformatoren (**13**) zur Reduzierung der Spannung für beide optische Einheiten (**2**a,b) gemeinsam in einer Powerbox (**14**) angeordnet und diese mit flexiblem Kabel mit den beiden optischen Einheiten (**2**a,b) verbunden ist,
- die Auswerte-Elektronik (**26**) jeder optischen Einheit (**2**a,b) im Gehäuse (**6**) der jeweiligen optischen Einheit (**2**a,b) angeordnet ist, und
- die optischen Einheiten (**2**a,b) um eine Schwenkachse (**20**), die in Fahrtrichtung (**10**) verläuft, schwenkbar sind.

2. Optischer Kopf (**1**) nach Anspruch **1**,
**dadurch gekennzeichnet, dass**
die beiden optischen Einheiten (**2a**,b) bezüglich der zwischen ihnen verlaufenden Mittelachse (**11**), die quer zur Fahrtrichtung (**10**) liegt, symmetrisch angeordnet sind,

3. Optischer Kopf (**1**) nach Anspruch 2,
**dadurch gekennzeichnet, dass**
der Laserstrahl (**5**) aus einem der Mittelachse (**11**) nächstliegenden Bereich der optischen Einheit (**2a**,b), insbesondere in einem Absatz (**7**) im Gehäuse (**6**) der optischen Einheit (**2a**,b), in Richtung parallel zur Mittelachse (**11**) als auch quer zur Fahrtrichtung (**10**) liegender Fächer (**5**) abgegeben wird und der vom Objekt zum optischen Sensor (**25**) reflektierte Strahl (**15**) von der Mittelachse (**11**) schräg nach außen verläuft.

4. Optischer Kopf (**1**) nach Anspruch 2 oder 3, **dadurch gekennzeichnet, dass**
im jeweiligen Gehäuse (**6**) der optischen Einheit (**2**a,b) das Austrittsfenster (**8**) gegenüber dem Eintrittsfenster (**9**) für den Laserstrahl (**5**) entgegen der Aussende-Richtung des Laserstrahles (**5**) zurückversetzt ist,

5. Optischer Kopf (**1**) nach Anspruch 2 bis 4,
**dadurch gekennzeichnet, dass**
eine längliche Laserlicht-Quelle (**12**) parallel zur Mittelachse (**11**) angeordnet ist und insbesondere der Laserlichtstrahl im Gehäuse zweimal umgelenkt wird.

6. Optischer Kopf (**1**) nach einem der vorhergehenden Ansprüche,
**dadurch gekennzeichnet, dass**
die optischen Einheiten (**2a**,b) gemeinsam um die Schwenkachse (**20**) schwenkbar sind, insbesondere zwischen zwei definierten, vorzugsweise rastbaren, Schwenkpositionen.

7. Optischer Kopf (**1**) nach Anspruch 2 bis 6,
**dadurch gekennzeichnet, dass**
- die beiden optischen Einheiten (**2**a,b), insbesondere gemeinsam, um die Mittelachse (**11**) gesteuert drehbar sind.

8. Geführter Düsenkopf (**30**) mit
- einem optischen Kopf (**1**) nach einem der vorhergehenden Ansprüche,
- Düsen (**29**) zum Ausbringen von flüssigen oder pastösen Stoffen,
**dadurch gekennzeichnet, dass**
- der Düsenkopf (**30**) mehrere in unterschiedliche Richtungen in einer lotrecht zur Fahrtrichtung (**10**) liegenden Querebene (**11**') ausgerichtete Düsen (**29**) umfasst, und
- die optischen Einheiten (**2**a,b) so ausgerichtet und dimensioniert sind, dass sie die Auftreff-Bereiche (**28**) von mindestens zwei der Düsen (**29**) abtasten können.

9. Düsenkopf (**30**) nach Anspruch **8**,
**dadurch gekennzeichnet, dass**
- der Düsenkopf (**30**) am freien Ende eines insbesondere um seine Längsachse drehbaren Düsenrohres (**31**) angeordnet ist, und die optischen Einheiten (**2a**,b), insbesondere am Düsenrohr seitlich befestigt sind, so dass das Eintrittsfenster (**9**) maximal **40** mm, besser maximal nur **30** mm, vom Düsenkopf (**30**) aus nach hinten in Richtung des Düsenrohr (**31**) des versetzt ist,

10. Düsenkopf (**30**) nach Anspruch **9**,
**dadurch gekennzeichnet, dass**
- die optischen Einheiten (**2a**,b) relativ zum Düsenrohr (**31**), mit den Düsen (**29**) oder ohne - die Düsen (**29**), um eine Schwenkachse (**20**) verschwenkbar sind, die oberhalb der nach hinten verlängerten Austrittsrichtungen der einzelnen Düsen (**29**) liegt.

11. Düsenkopf (**30**) nach einem der Ansprüche **9** oder **10**,
**dadurch gekennzeichnet, dass**
betrachtet in Fahrtrichtung (**10**) die Gehäuse (**6**) der optischen Einheiten (**2**a,b) maximal **30** %, besser maximal **20**%, besser maximal **10** %, breiter ist als der in Düsenkopf (**30**) oder das Düsenrohr (**31**), je nachdem welches von beiden in dieser Blickrichtung das breitere Teil ist,

12. Düsenkopf (**30**) nach einem der Ansprüche **9** bis **11**,
**dadurch gekennzeichnet, dass**
betrachtet in Fahrtrichtung (**10**) die Gehäuse (**6**) der optischen Einheiten (**2**a,b) parallel zur Richtung des Düsenrohres (**31**) verlaufen und die Austrittsrichtung eines fächerförmigen Laserstrahles (**5**) schräg dazu verläuft.

13. Düsenkopf (**30**) nach einem der Ansprüche **9** bis **12**,
**dadurch gekennzeichnet, dass**
das Düsenrohr (**31**) samt Düsenkopf (**30**) und den optischen Einheiten (**2**a,b) um die Mittelachse (**11**) des Düsenrohrs (**31**) schwenkbar ist, die gleichzeitig die Mittelachse (**11**) zwischen den beiden optischen Einheiten (**2**a,b) ist

14. Düsenkopf (**30**) nach einem der Ansprüche **9** bis **13**,
**dadurch gekennzeichnet, dass**
die Powerbox (**14**) in dem vom Düsenkopf (**30**) zurückversetzten mittleren oder hinteren Teil des Düsenrohres (**31**), und insbesondere mit diesem mitdrehend, angeordnet ist.

15. Düsenkopf (**30**) nach einem der Ansprüche **8** bis **14**,
**dadurch gekennzeichnet, dass**
der optische Kopf (**1**) und der Düsenkopf (**30**) eine insbesondere gemeinsame Steuerung (**19**) aufweisen, die in der Lage ist, in Echtzeit abhängig von den Signalen der optischen Führungs-Einheit den Düsenkopf (**30**) entlang der Spur (**3**) zu führen und so zu schwenken, dass unter automatischer Auswahl der passenden Düse (**29**) des Düsenkopfes (**30**) die Raupe (**4**) optimal in der Spur (**3**) aufgebracht werden kann,

16. Düsenkopf (**30**) nach einem der Ansprüche **9** bis **15**,
**dadurch gekennzeichnet, dass**
die optischen Einheiten (**2**a,b) mittels eines Schnellverschlusses, insbesondere einer Rastvorrichtung (**27**), am Düsenkopf (**30**) und/oder dem Düsenrohr (**31**) befestigt sind.

## Claims

1. An optical head (1) operating with laser light, and in particular according to a light intersection triangulation method, comprising
two optical units (2a, b) for supporting the optical head (1) along an optically detectable path (3) in a driving direction (10) and for testing a bead (4) for example made from glue arranged in or on the path (3),
wherein the two optical units (2a, b) are arranged offset from one another in the driving direction (10) and the optical unit (2a) arranged in front in the driving direction (10) operates as a guide unit and the rear optical unit (2b) operates as test unit, **characterized in that**
- each optical unit (2a, b) is arranged in individual housing (6)
- a power supply and power infeed including all transformers (13) for reducing a voltage for both optical units (2a, b) are jointly arranged in a power box (14) which is connected with a flexible cable with the two optical units (2a, b),
- processing electronics (26) of each optical unit (2a, b) are arranged in the housing (6) of the respective optical unit (2a, b), and
- the optical units (2a, b) are pivotable about a pivot axis (20) which extends in the driving direction (10).

2. The optical unit according to claim 1, **characterized in that** the two optical units (2a, b) are symmetrically arranged with respect to a center axis (11) extending between them and transversal to the driving direction (10).

3. The optical head (1) according to claim 2, **characterized in that** the laser beam (5) is emitted from a portion of the optical unit (2a, b) that is most proximal to the center axis (11), in particular at a step (7) in the housing (6) of the optical unit (2a, b) in a direction parallel to the center axis (11) and also transversal to the driving direction (10) as a fan (5), and a beam (15) reflected from the object to the optical sensor (25) extends from the center axis (11) at a slant angle in an outward direction.

4. The optical head (1) according to claim 2 or 3,
**characterized in that**
the outlet window (8) is recessed relative to the inlet window (9) for the laser beam (5) against the output direction of the laser beam (5) in a respective housing (6) of the two optical unit (2a, b).

5. The optical head (1) according to claim 2 through 4,
**characterized in that**
an elongated laser light source (12) is arranged parallel to the center axis (11) and in particular the laser light beam is deflected in the housing twice.

6. The optical head (1) according to one of the preceding claims
**characterized in that**
the optical units (2a, b) are jointly pivotable about the pivot axis (20), in particular between two defined, advantageously lockable pivot positions.

7. The optical head (1) according to claim 2 through 6
**characterized in that**
the two optical units (2a, b) are rotatable in a controlled manner about the center axis (11) in particular jointly rotatable.

8. A controlled nozzle head (30), comprising
- an optical head (1) according to one of the preceding claims,
- nozzles (29) for putting out liquid or pasty materials,
**characterized in that**
- the nozzle head (30) includes plural nozzles (29) that are oriented in various directions in a transversal plane (11)' oriented orthogonal to the driving direction (10), and
- the two optical units (2a, b) are oriented and sized so that they are configured to can scan impact portions (28) of at least two of the nozzles (29).

9. The nozzle head (30) according claim 8,
**characterized in that**
the nozzle head (30) is arranged at a free end of a nozzle tube (31) that is rotatable in particular about its longitudinal axis, and the two optical units (2a, b) are laterally attached in particular at the nozzle tube (31) so that the inlet window (9) is offset 40 mm at the most, better only 30 mm at the most from the nozzle head (30) in backward direction towards the nozzle tube (31)

10. The nozzle head (30) according to claim 9,
**characterized in**
the two optical units (2a, b) are pivotable relative to the nozzle tube (31) with the nozzles (29) or without the nozzles (29) about a pivot axis (20) which is arranged above backward extended outlet directions of the individual nozzles (29).

11. The nozzle head (30) according to claim 9 or 10,
**characterized in that**
viewed in the driving direction (10) the housings (6) of the two optical units (2a, b) are wider at the most by 30 percent, better at most by 20 percent, better at most by 10 percent, than the nozzle head (30) or the nozzle tube (31), depending upon which of both is the wider component in this viewing direction.

12. The nozzle head (30) according to one of the claims 9 thorough 11
**characterized in that**
the housings (6) of the two optical units (2a, b) viewed in the driving direction (10) extend parallel to the direction of the nozzle tube (31) and the outlet direction of a fanned laser beam (5) extends at slant angle thereto.

13. The nozzle head (30) according to one of the claims 9 through 12,
**characterized in that**
the nozzle tube (31) including the nozzle head (30) and the optical units (2a, b) is pivotable about the center axis (11) of the nozzle tube (31) which simultaneously forms the center axis (11) between the two optical units (2a, b)

14. The nozzle head (30) according to one of the claims 9 through 13
**characterized in that**
the power box (14) is arranged in a center portion or rear portion of the nozzle tube (31) which center or rear portion is offset backward from the nozzle head (30), in particular so that the power box rotates together with the center or rear portion of the nozzle tube.

15. The nozzle head (30) according to one of the claims 8 through 14,
**characterized in that**
the optical head (1) and the nozzle head (30) have in particular a common control (19) which is configured to control the nozzle head (30) along the track (3) in real-time as a function of signals of the optical control unit and to pivot the nozzle head (30) so that automatically selecting an appropriate nozzle (29) of the nozzle head (30) facilitates applying the bead (4) in the track (5) in an optimum matter.

16. The nozzle head (30) according to one of the claims 9 through 15
**characterized in that**
the optical units (2a, b) are attached by quick connecter, in particular an interlocking device (27) at the nozzle head (30) and/or the nozzle tube (31).

## Revendications

1. Tête optique (1), laquelle fonctionne au moyen d'une lumière laser, et en particulier selon le procédé de triangulation par coupe optique,
comprenant deux unités optiques (2a, b) servant à guider la tête (1) le long d'une voie (3) pouvant être détectée optiquement dans sa direction de déplacement (10) et servant à contrôler un cordon (4) appliqué dans ou sur la voie (3), par exemple de colle, où
les deux unités optiques (2a, b) sont disposées de manière décalée dans la direction de déplacement (10) et celle située à l'avant (2a) dans la direction de déplacement (10) fonctionne en tant qu'unité de guidage et celle à l'arrière (2b) fonctionne en tant qu'unité de contrôle,
**caractérisée en ce**
- **que** chaque unité optique (2a, b) est disposée dans un boîtier (6) propre,
- **que** l'alimentation en courant et l'amenée de courant y compris tous les transformateurs (13) servant à réduire la tension pour les deux unités optiques (2a, b) sont disposés conjointement dans une boîte PowerBox (14) et que celle-ci est reliée par un câble flexible aux deux unités optiques (2a, b),
- **que** l'électronique d'évaluation (26) de chaque unité optique (2a, b) est disposée dans le boîtier (6) des unités optiques (2a, b) respectives, et
- **que** les unités optiques (2a, b) peuvent pivoter autour d'un axe de pivotement (20), qui s'étend dans la direction de déplacement (10).

2. Tête optique (1) selon la revendication 1,
**caractérisée en ce**
**que** les deux unités optiques (2a, b) sont disposées de manière symétrique par rapport à l'axe médian (11) s'étendant entre elles, lequel est situé de manière transversale par rapport à la direction de déplacement (10).

3. Tête optique (1) selon la revendication 2,
**caractérisée en ce**
**que** le rayon laser (5) est émis depuis une zone située à proximité immédiate de l'axe médian (11) de l'unité optique (2a, b), en particulier dans un épaulement (7) dans le boîtier (6) de l'unité optique (2a, b), dans une direction parallèle par rapport à l'axe médian (11) sous la forme d'un éventail (5) situé également de manière transversale par rapport à la direction de déplacement (10), et que le rayon (15) réfléchi par l'objet en direction du capteur (25) optique s'étend de manière oblique vers l'extérieur depuis l'axe médian (11).

4. Tête optique (1) selon la revendication 2 ou 3,
**caractérisée en ce**
**que**, dans le boîtier (6) respectif de l'unité optique (2a, b), la fenêtre de sortie (8) est en retrait par rapport à la fenêtre d'entrée (9) pour le rayon laser (5) dans le sens opposé à la direction d'émission du rayon laser (5).

5. Tête optique (1) selon la revendication 2 à 4,
**caractérisée en ce**
**qu'**une source de lumière laser (12) allongée est disposée de manière parallèle par rapport à l'axe médian (11) et en particulier que le rayon de lumière laser est dévié à deux reprises dans le boîtier.

6. Tête optique (1) selon l'une quelconque des revendications précédentes,
**caractérisée en ce**
**que** les unités optiques (2a, b) peuvent pivoter conjointement autour de l'axe de pivotement (20), en particulier entre deux positions de pivotement définies, de préférence pouvant être encliquetées.

7. Tête optique (1) selon la revendication 2 à 6,
**caractérisée en ce**
- **que** les deux unités optiques (2a, b) peuvent tourner de manière commandée, en particulier conjointement, autour de l'axe médian (11).

8. Tête à buses (30) guidée comprenant
- une tête optique (1) selon l'une quelconque des revendications précédentes,
- des buses (29) servant à distribuer des substances liquides ou pâteuses, **caractérisée en ce**
- **que** la tête à buses (30) comprend plusieurs buses (29) orientées dans différentes directions dans un plan transversal (11') situé de manière perpendiculaire par rapport à la direction de déplacement (10), et
- **que** les unités optiques (2a, b) présentent une orientation et des dimensions telles qu'elles peuvent sonder les zones d'impact (28) d'au moins deux des buses (29).

9. Tête à buses (30) selon la revendication 8,
**caractérisée en ce**
**que** la tête à buses (30) est disposée au niveau de l'extrémité libre d'un tube de buse (31) pouvant tourner en particulier autour de son axe longitudinal, et que les unités optiques (2a, b) sont fixées sur le côté, en particulier au niveau du tube de buse, de sorte que la fenêtre d'entrée (9) est décalée au maximum de 40 mm, mieux au maximum uniquement de 30 mm, depuis la tête à buses (30), vers l'arrière, en direction du tuyau de buse (31).

10. Tête à buses (30) selon la revendication 9,
**caractérisée en ce**
**que** les unités optiques (2a, b) peuvent pivoter par rapport au tube de buse (31), avec les buses (29) ou sans les buses (29), autour d'un axe de pivotement (20), lequel est situé au-dessus des directions de sortie prolongées vers l'arrière des diverses buses (29).

11. Tête à buses (30) selon l'une quelconque des revendications 9 ou 10,
**caractérisée en ce**
**que**, observés dans la direction de déplacement (10), les boîtiers (6) des unités optiques (2a, b) sont plus larges au maximum de 30 %, mieux au maximum de 20 %, mieux au maximum de 10 % que la tête à buses (30) ou le tube de buse (31), selon celui des deux qui constitue, dans ladite direction d'observation, la partie la plus large.

12. Tête à buses (30) selon l'une quelconque des revendications 9 à 11,
**caractérisée en ce**
**que**, observés dans la direction de déplacement (10), les boîtiers (6) des unités optiques (2a, b) s'étendent de manière parallèle par rapport à la direction du tube de buse (31), et que la direction de sortie d'un rayon laser (5) en forme d'éventail s'étend de manière oblique par rapport à ceux-ci.

13. Tête à buses (30) selon l'une quelconque des revendications 9 à 12,
**caractérisée en ce**
**que** le tube de buse (31) avec la tête à buses (30) et les unités optiques (2a, b) peuvent pivoter autour de l'axe médian (11) du tube de buse (31), lequel constitue dans le même temps l'axe médian (11) entre les deux unités optiques (2a, b).

14. Tête à buses (30) selon l'une quelconque des revendications 9 à 13,
**caractérisée en ce**
**que** la boîte PowerBox (14) est disposée dans la partie centrale ou arrière, en retrait par rapport à la tête à buses (30), du tube de buse (31), et en particulier de manière à être entraînée en rotation avec celui-ci.

15. Tête à buses (30) selon l'une quelconque des revendications 8 à 14,
**caractérisée en ce**
**que** la tête optique (1) et la tête à buses (30) présentent une commande (19) en particulier commune, qui est en mesure de guider en temps réel, en fonction des signaux de l'unité de guidage optique, la tête à buses (30) le long de la voie (3) et de la faire pivoter de telle sorte que, en sélectionnant de manière automatique la buse (29) adaptée de la tête à buses (30), le cordon (4) peut être mis en place de manière optimale dans la voie (3).

16. Tête à buses (30) selon l'une quelconque des revendications 9 à 15,
**caractérisée en ce**
**que** les unités optiques (2a, b) sont fixées au moyen d'une fermeture rapide, en particulier au moyen d'un dispositif d'encliquetage (27), au niveau de la tête à buses (30) et/ou au niveau du tube de buse (31).
